# EUROPEAN PATENT SPECIFICATION

(11) **EP 2 706 607 B1**
(45) Date of publication and mention of the grant of the patent: **05.11.2014**
(21) Application number: 12183499.8
(22) Date of filing: 07.09.2012
(51) Int. Cl.: H01M 10/42, H01M 10/44

(54) **Desulphation of lead-acid batteries**
Entschwefelung von Blei-Säure-Batterien
Désulphation d'accumulateurs au plomb

(43) Date of publication of application: 12.03.2014
(73) Proprietor: N Holding AB, 192 07 Sollentuna (SE)
(72) Inventor: Karlsson, Gunder, 115 32 Stockholm (SE)
(74) Representative: Engdahl, Stefan

(56) References cited:
- US-A- 5 677 612
- US-A1- 2008 246 440
- US-A1- 2009 243 547

## Description

### Technical Field of the Invention

The present invention relates to a method, a battery device and a hybrid energy system for desulphating a lead-acid battery.

### Background Art

Radio base stations or Base Transceiver stations are generally powered by on-site power units if energy cannot be supplied directly, via for example a power grid, to the radio base station. This is e.g. the case for radio base stations located in rough terrain or in other isolated locations, such as in remote communities that are served by poor roads and have poor infrastructure

Recently, a new practice is to use a diesel generator together with a battery bank to power such radio base stations. Previous practice has been to use two parallel diesel generators with one generator running at a time. In the new scheme of operation there is only one diesel generator and a large battery. The diesel generator runs intermittently at a high power level, thereby feeding the telecom equipment and at the same time charging the batteries. When the batteries have been charged, the diesel generator is turned off and the telecom equipment runs on batteries. This scheme is referred to as hybrid operation. Different battery technologies are used in such hybrid application.

In order to decrease the run time of the diesel generator, i.e. minimizing the fuel consumption of the generator as well as the charging time of the battery, an advanced way to operate the hybrid system is used. This way is operation of the battery in partial state of charge, PSOC. In PSOC mode the batteries are intentionally not fully charged. The charge of the batteries is therefore stopped at a state of charge where the diesel gensets still can run at near full speed. Normally this state of charge (SOC) can be from 60-95%. The operation of hybrid power plants in this PSOC mode works very well in the short run and fuel savings are very substantial.

Batteries used in hybrid systems are rechargeable lead acid batteries. The lead acid batteries however suffer from a gradual decrease in both the discharge capacity, which is related to the amount of energy that may be extracted from the battery, and the charge acceptance, which is related to the rate at which the battery may be charged and the highest power level to which the battery may be charged. Such deterioration of the operation of the battery is slow but builds over weeks and gradually accelerates until the battery does not meet required of discharge capacity. One major cause for this phenomenon is the sulphation process, i.e. the recrystallization of lead sulphate. The term sulphation refers to the accumulation of large lead sulphate crystals. During the discharge process lead sulphate crystals are produced but these crystals are small and highly reactive and cause not trouble in the charge process. The lead sulphate particles produced in the discharge reaction have a distribution of sizes and some crystals are slightly larger than the others. These slightly larger crystals charge slightly slower than the other crystals. At the end of an incomplete charge some of these crystals remain and will serve as templates for precipitation of new crystals during a following discharge. The crystals remain as templates for lead sulphate precipitation for the next and subsequent discharge cycles. The effect is usually noticeable after 10-20 charge cycles. When the charge cycle of the operation remains constant, this fraction will steadily grow. As a consequence, capacity will diminish. The lead sulphate particles that are large are said to be sulphated. They will not be charged if the battery is charged by the charge conditions that would have been needed when the battery started the operation of this partial state of charge scheme. Charging has to be performed much more strongly to remove these large particles. This can be achieved by fully charging the battery, e.g. by an extension of the charging time or by an increase in voltage. Battery charging systems always have settings used for removing lead crystals and the function is commonly referred to as equalization, in which the charging voltage and time are increased in relation to normal settings.

For hybrid sites, this desulphation or equalization may normally be performed weekly or bi-weekly by extending the charge time to 12-24 h. Thus every time the diesel generator runs such an extended time, it will run at a very low power output, essentially close to idling, and at a very low efficiency. Still this run time, although at a low power level, will create a need for maintenance. Fuel will be needed to be refilled early and oil changes need to be made prematurely.

Thus, there is a need in the art for improved methods for powering hybrid sites

### Summary of the Invention

It is an object/aim of the present invention to provide an improvement or alternative to the prior art methods and devices for operating a hybrid system.

The above-mentioned objects as well as other objects of the invention, which can be gathered by a person skilled in the art after having studied the description below, are met by the different aspects of the disclosed invention.

As a first aspect of the invention, there is provided a method for desulphating a lead-acid battery storage system during its powering of a load, wherein the battery storage system comprises at least two batteries connected in parallel, the method comprising
- disconnecting at least one battery from the load, and
- desulphating the disconnected battery with power from at least one battery connected to the load.

Two batteries connected in parallel refers to the batteries connected such that the total output current is the sum of the current through the individual batteries. Further, if one battery is disconnected from the load, the other battery is still able to supply the load with power. A skilled person understands how two batteries may be connected in parallel configuration.

A lead acid battery storage system thus comprises individual lead acid batteries with the ability to power the same load.

Lead-acid batteries usually comprise a lead-dioxide electrode (positive), a metallic lead electrode (negative) and a solution electrolyte comprising sulphuric acid. During discharge of a lead acid battery, the lead dioxide (positive plate) and lead (negative plate) generally react with the electrolyte of sulphuric acid to create lead sulphate, water and energy. Further, during charging, such a cycle is reversed, which means that the lead sulphate and water are electro-chemically converted to lead, lead dioxide and sulphuric acid by an external electrical charging source.

Desulphation refers to reversing the sulphation of a lead-acid battery, e.g. by breaking down sulphate crystals and/or dissolving sulphate crystals. Desulphation may thus involve breakdown of large lead sulphate crystals formed in the plates of the battery. Desulphation is also known as equalization of a battery. The need for desulphation may for example depend on the design of the battery and the type of battery acid used. Further, the need for desulphation may also be dependent on the relation between the charging time and the time of discharge as well as the depth of discharge of the battery.

The inventor has realised that the operation of e.g. hybrid sites have been severely impeded by the necessity to perform these equalization charges to the lead acid battery and that much of the possible saving from the hybrid concept has remained unused. The first aspect of the invention is therefore based on the insight that if the battery storage system is divided into several independent batteries and also connected in parallel, it is possible to use power from one battery to equalize other batteries of the battery storage system during a discharge, i.e. while the battery storage system is still powering the load. This has found to be advantageous since such an operation may drastically decrease the run time of e.g. a generator if the method is used in a hybrid system.

Thus, the present invention relates to means for internal desulphation of a battery storage system, such as a system comprising at least two battery. In other words, the method of internal desulphation decreases or even eliminates the need of an external desulphator. The method may further decrease the need for long equalization times and long run times for diesel generators when used e.g. in a hybrid system.

The inventor has further realised that energy losses are minor if using the method of the first aspect. As an example, the battery being desulphated may be overcharged by e.g. 4-6%, and the desulphation may for example only occur once a week with 20-30 discharge-recharge cycles in between. This means that in the long run, energy losses may be minor.

The method of the first aspect is further advantageous in that it provides for desulphation using a constant current instead of using a constant voltage, which is the only method in use today in hybrid operation. Using a constant current from one of the batteries for desulphation provides for much shorter desulphation times.

Thus, in embodiments of the first aspect, the desulphation of the disconnected battery is performed such that a substantially constant current is delivered to the disconnected battery from the at least one battery still connected to the load.

It is to be understood that the battery storage system may comprise more than just two batteries, such as at least four, such as at least six, such as at least ten, such as at least twenty, such as at least twenty-four batteries.

The batteries of the system may be of equal power, i.e. with capacity of delivering the same power to the load.

In other words, the method may be described as comprising the following steps:
a) providing power to a load from a plurality of independent batteries of the system
b) disconnecting a target battery to be desulphated from the load
c) desulphating the target battery with power from at least one of the other batteries of the set such that the at least one other battery simultaneously provides power to the load and power for desulphating the target battery;
d) reconnecting the desulphated target battery to the load.

The load may for example be a radio base station.

In embodiments of the first aspect of the invention, the at least two batteries comprise at least one battery string. For example, each of the at least two batteries may comprise at least one battery string, or one or a part of the at least two batteries may comprise at least one battery string.

As an example, the at least one battery string comprises at least two battery cells coupled in series. A battery string may for example comprise more than 12 such as 24, battery cells connected in series.

A battery cell refers to the smallest physical entity in a battery for storing electric energy.

In embodiments of the first aspect, the method is further comprising reconnecting the disconnected battery after desulphation;

Thus, after desulphation of the battery, it may be reconnected to the load to further provide power to the load.

In embodiments of the first aspect of the invention, the method is further comprising
- disconnecting another battery from the load, and
- desulphating the disconnected battery with power from at least one battery connected to the load.

Thus, the present invention provides for equalization or desulphation of all batteries of a battery storage system.

In embodiments of the first aspect of the invention, the method is further comprising
- during desulphation of the disconnected battery, raising the voltage of the power from at least one battery connected to the load.

The voltage may for example be raised by electronic means.

As an example, the voltage may be raised by means of at least one DC/DC step-up converter.

A DC/DC step-up converter refers to a DC-to-DC converter, i.e. an electronic circuit which converts a source of direct current (DC) from one voltage level to another, in this case such that the output voltage higher than the input voltage. A DC/DC step-up converter is thus a class of power converter.

The at least one DC/DC step up converter may be arranged in a separate shell, or if several converters are used, they may be arranged as modules on a single printed circuit board (e.g. as POL converters or step-up circuits).

In embodiments of the first aspect, the step of disconnecting a battery occurs after recharge of all batteries of the battery storage system.

This means that desulphation or equalization of one of the batteries may occur after recharge, e.g. when the battery strings have a high state-of-charge (SOC), thereby facilitating that one string may be desulphated with power from the other strings. The step of disconnecting may thus occur when the batteries have a SOC of about or above 80%, such as about or above 85%, such as about or above 90%, such as about or above 95%.

Further, the step of disconnecting a battery may occur after at least one cycle of recharge and discharge of all batteries of the battery storage system.

Thus, desulphation does not have to occur after all recharge cycles, but the battery system may be discharged and recharged a few times, such as at least two times, such as at least four times, such as at least eight times, such as at least twelve times, before disconnecting of a battery occurs.

In embodiments, desulphation may be performed after about 20 - 30 discharge and recharge cycles.

As an example, the batteries may be at 60-99 %, such as 85-97 %, such as 90-95%, SOC, after recharge.

As another example, the batteries may be at 85-95 % state of charge, SOC, after recharge

State of charge (SOC) is the available capacity of the battery expressed as a percentage of the maximum capacity of a new battery string. The maximum capacity may drop during the lifetime of a battery, which is why the maximum capacity of a new battery is the preferred reference.

In embodiments of the first aspect, the desulphation may end when the disconnected battery has a state of charge, SOC of about 25-55 %.

In embodiments of the first aspect, the desulphation is performed by providing a substantially constant current to the disconnected battery.

A "substantially constant" current thus refers to a current with minor fluctuations during desulphation, such as a current having a constant value +/-10%.

By using a constant current for battery desulphation, a low power may be used for desulphation.

Using a constant current for desulphation, the inventors have found that the desulphation time for a battery in e.g. a hybrid system may be about six to eight times shorter compared to if a constant voltage is used. As an example, the desulphation time using a constant current may be about 2-3 hours, whereas the desulphation time may be about 12-24 hours if a constant voltage from e.g. a generator is used

In embodiments of the first aspect, the desulphation is performed with a substantially constant current of about 1-10 A, such as 2-5 A per 100 Ah capacity of the battery string.

As discussed above, desulphation using a constant current may increase the rate of desulphation, i.e. shorten the desulphation time.

In prior art methods in which an external desulphator is used, e.g. in hybrid systems when the generator is used for desulphation, it is often not possible to use a constant current for desulphation since the loads powered by the batteries usually does not withstand the high voltages that may arise when using a constant current from an external desulphator. In contrast, the method of the present invention, as discussed above, facilitates the use of a constant current for desulphation without exposing the load, which is powered by the battery, to high voltages.

In embodiments of the first aspect, the load comprises a radio base station.

The radio base station may for example be a remote radio base station, located in isolated locations.

As a second aspect of the invention, there is provided a battery device for powering a radio base station comprising
- at least two lead-acid batteries connected in parallel;
- a switch for disconnecting and re-connecting at least one of the batteries from/to the radio base station; and
- at least one step-up converter arranged to raise the voltage of the power of the connected batteries for desulphating the disconnected battery.

The at least two lead acid batteries connected in parallel may further be arranged to power the same load during battery operation of all batteries.

The switch may be for disconnecting and re-connecting at least one of the strings from/to the load while the other string or strings remain connected to the load.

The switch refers to a component, such as an electrical component, with the capacity of e.g. breaking an electrical circuit or diverting the current from one direction in a circuit to another direction in the circuit. Thus, the switch may in a circuit be in two states, an open state or a closed state. The switch may be automatically operated for disconnecting and reconnecting strings from and to the load.

As discussed in relation to the first aspect above, a step-up converter refers to a converter, e.g. an electronic circuit, which converts a source of direct current (DC) from one voltage level to another, generally such that the output voltage higher than the input voltage. As an example the step-up converter may comprise at least one DC/DC converter, as discussed in relation to the first aspect above.

The second aspect of the invention thus provides a battery device having internal desulphation means, in that it may disconnect a battery from the load and use power from the other batteries for desulphating the disconnected battery.

Further, parts of the device, such as the switch, may be arranged such that it may provide a constant current to the disconnected battery during desulphation.

As a third aspect of the invention, there is provided a hybrid energy system for a radio base station comprising
- at least one battery device according to any aspect of the invention above arranged to power the radio base station; and
- a generator arranged to recharge the batteries.

The generator may for example be a diesel generator. A diesel generator may provide the battery device with high power, thus decreasing the time during which the battery set is charged.

The generator may for example have a maximum output power of above 5 kW, such as above 6 kW, such as above 7 kW, such as above 8 kW, such as above 9 kW, such as above 10 kW.

As an example, the maximum output power of the generator may exceed the average load of the radio base station.

The third aspect of the invention is advantageous in that it provides for a hybrid energy system with a battery device having internal desulphation means, i.e. desulphation of the lead acid battery is not necessary performed with the diesel generator but may be accomplished with the battery device. The total generator time further decreases, which leads to less pollution. During desulphation, the battery device may provide a constant current to the battery that is desulphated. This is more advantageous compared to desulphation using the generator, which usually provides a constant voltage to the battery or batteries undergoing desulphation. Using a constant current facilitates a much shorter desulphation time and as discussed above, desulphation using a constant current is usually not feasible using the generator, as in prior art systems. This is because using a constant current with a generator may give rise to high voltages that may damage the load, such as a base station. Since desulphation using a constant current may involve using a low power, it is further inefficient to run a generator to provide such a low power. To summarize, the load powered by a hybrid system usually does not withstand high voltages, and providing the low power needed for desulphation from a generator would involve running the generator in a sub-optimal fashion, which is why the present invention comprising internal desulphation provides an advantage.

More specifically, by using a constant current for desulphation, the inventors have found that the desulphation time for a battery in a hybrid system may be about six to eight times shorter compared to if a constant voltage is used. As an example, the desulphation time using a constant current may be about 2-3 hours, whereas the desulphation time may be about 12-24 hours if a constant voltage from the generator is used. Usually, the powered load sets the voltage limit used by the hybrid system. As an example, telecom equipment such a s a radio base station may have a maximally tolerated voltage of about 57 V, which means that if the batteries of the device are to be desulphated with the generator, this voltage may not be exceeded. This means that a longer time is needed for desulphation compared to if a constant current from the battery is used. Thus, if the generator is used for desulphation, it may only work inefficiently at low power, thereby increasing the generator time and the fuel consumption. This may in turn increase the need for servicing the generator, i.e. the service intervals may be shorter, which is undesirable.

The hybrid system of the present aspect of the invention, in which desulphation instead may be achieved with the internal desulphation method as described herein, instead facilitates that the generator may be used for a shorter period of time. Consequently, emissions from the generator are decreased and the need for servicing the system is decreased, i.e. the service interval is increased.

Typical discharge times of the batteries may be about 6-12 hours. The charging time should preferably be as short as possible. This time is e.g. dependent on the discharge time (if a short discharge time has been used, then, due to cooling of the battery, the shortest possible charging time may be difficult to use). Generators and rectifiers may be used to shorten the charging time. Charging times about 1-3 hours may be used.

Further, the hybrid system may be arranged such that the power supply to the radio base station is controlled such that all power is supplied solely from a battery set or battery device. That is, the supply of power to the radio base station is not switched between different energy sources, but is solely supplied from a battery device. This is advantageous since it provides for an uninterrupted power distribution to the radio base station as well as a reduced CO₂ emission.

In embodiments of the present invention, the hybrid system further comprises an alternative energy source. An alternative energy source refers to an energy source that derives energy from the sun, wind, waves, or other natural renewable sources. As an example, the alternative energy source may be at least one wind energy source and/or at least one solar energy source.

### Brief description of the drawings

Figure 1 shows a schematic circuit diagram of a hybrid system when the battery storage system is recharged, as well as the load is supplied, by means of a generator.
Figure 2 shows the hybrid system of Fig. 1 when the load is powered by the battery system.
Figure 3 shows the hybrid system when one of the batteries is desulphated by power from the other battery.
Figure 4 shows the hybrid system at reconnection of the batteries right after desulphation of one of the batteries.
Figure 5 shows the hybrid system when the other battery(as compared to Fig. 3) is desulphated.
Figure 6 shows the End of Discharge Voltage as a function of time (or cycles) of a battery that is desulphated by means of internal desulphation (solid line, A) compared to a battery that is desulphated by means of conventional desulphation using e.g. a generator (B; dotted line).

### Detailed description of the Invention

The following non-limiting examples will further illustrate the present invention.

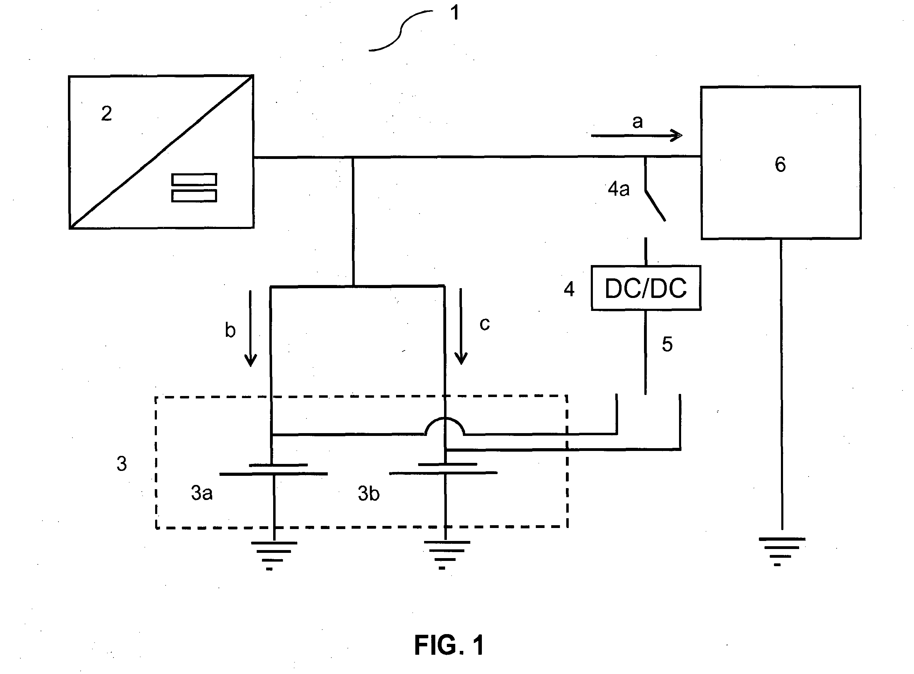

As an example on how the desulphation method operates, reference is made to Figs. 1-5. Fig. 1 shows a hybrid system 1 for powering a radio base station 6. The system 1 comprises a diesel generator 2 and a battery storage system 3, in this case containing two batteries 3a and 3b that are connected in parallel. The batteries 3a and 3a each comprise at least one string of battery cells that are coupled in series. It is however to be understood that the battery storage system may comprise more than two batteries connected in parallel. The batteries 3a and 3b are two equal size batteries that both may provide the power to a load, in this case the radio base station, during battery operation. As an example, the battery operation time may be about 11 h in order not to wear out the batteries prematurely. The capacity of the batteries may be chosen so that they can provide 24 h of back-up if needed. The batteries are charged after 11 h of battery operation with a high current from the diesel generator 2, depicted by arrows b and c in Fig. 1. Thus, during charge of the batteries, power from the diesel generator 2 may be used to power the radio base station 6, as depicted by arrow a. However, the generator 2 and the battery storage system 3 may also be connected such that the battery storage system 3 solely provides power to the base station 6, even during recharging of the batteries.

The hybrid system 1 further comprises a step up converter 4, a DC/DC converter, and switches 4a and 5. As seen in Fig. 1, the position of switch 4a during recharge is such that the step up converter is disconnected during recharge of the batteries 3a and 3b.After recharge, the batteries may be close to 90% SOC.

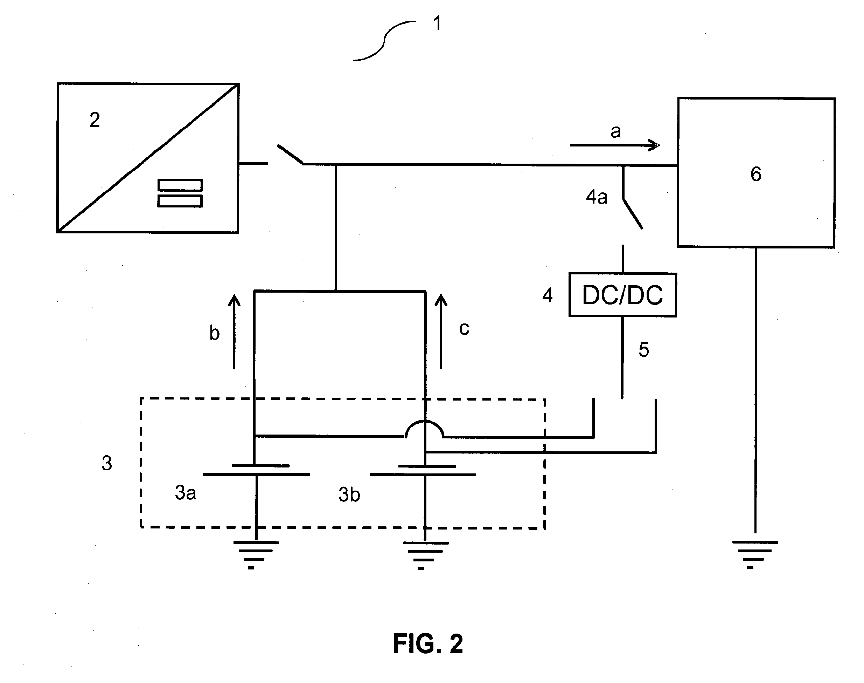

Fig. 2 shows how the batteries 3a and 3b power the radio base station during discharge, as depicted by arrows b and c in Fig. 2. As seen in Fig. 2, the diesel generator is now disconnected from the radio base station 6 by means of switch 2a. It is to be understood that the switch 2a is not entirely necessary but is shown here for clarity. The power from the generator 2 may also be turned on and off by a control regulating its start and stop. Thus, all power to the radio base station, depicted by arrow a, comes from batteries 3a and 3b.

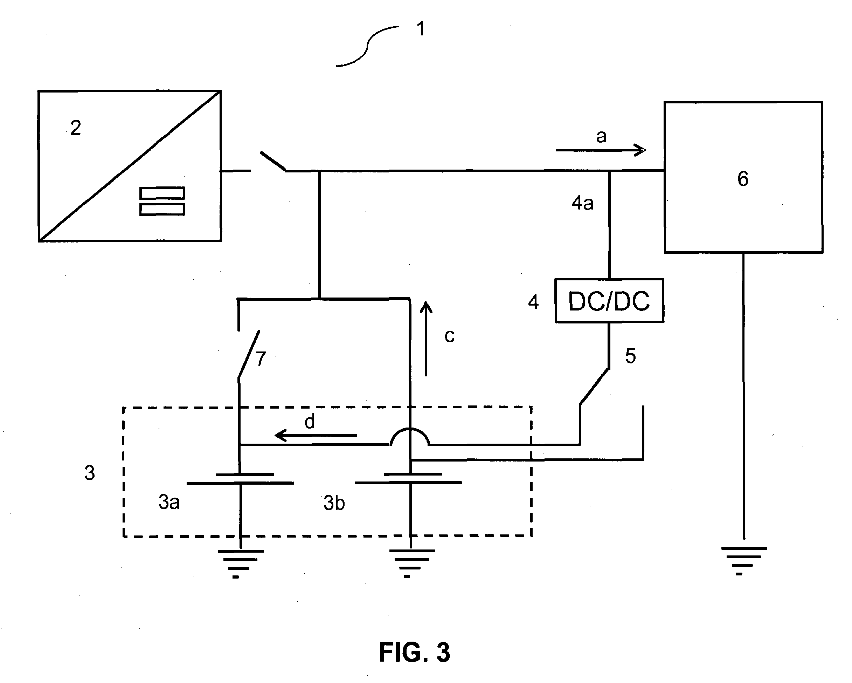

After a certain number of discharge and recharge cycles of the batteries, battery3a may be exposed to equalization from battery 3b This is shown in Fig. 3. Immediately after the recharge, battery 3a is disconnected from the DC system bus bar (schematically depicted by switch 7) and a step up converter 4 is connected to battery 3b by means of switches 4a and 5. In practice, the connection of the step up converter may also be arranged electronically with dual outputs which are activated electronically rather than switching electromechanically. Thus, battery 3a provides power to radio base station 6, as depicted by arrows c and a, and simultaneously desulphates the battery 3b, as depicted by arrow d. The total amount of charge that is needed to equalize battery 3a may be in the range of 13-15% calculated as SOC. Due to the conversion losses and high voltage needed for the overcharge one can estimate the energy need on the battery 3b side to be in the range of 16-19% SOC. A proper time period to use for the equalization in this case is 3-5 hours. For this particular example battery 3b may discharge 1/12(8%) SOC per hour when it is providing the load on its own, in addition to this it will have to provide equalization to battery 3a.Battery 3b is starting at SOC 90% and may be at 52-32 % at the end of the charge equalization period.

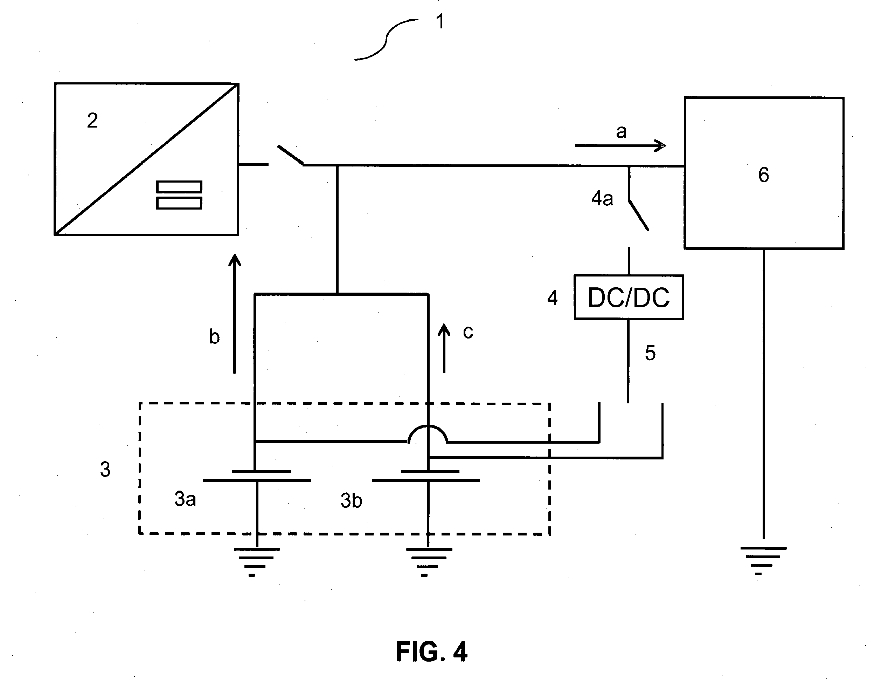

Fig. 4 shows the end of the equalization period, whereby the step up converter 4 is disconnected and battery 3a is reconnected to the radio base station. The disconnected battery may then be overcharged, such as overcharged to about 4-6%. When battery 3a is reconnected to the load and battery 3b, there will be equalization current flowing during the first minutes after connection actually putting some charge back into battery 3b. After this particular current has subsided, battery 3a may during the remaining discharge provide more of the load current than battery 3b. This is depicted by the larger arrow b compared to arrow c in Fig. 4. In this particular case at the end of the battery operation time period, the batteries may be fairly equal in state of charge. Normally they may be within 5% SOC strings.

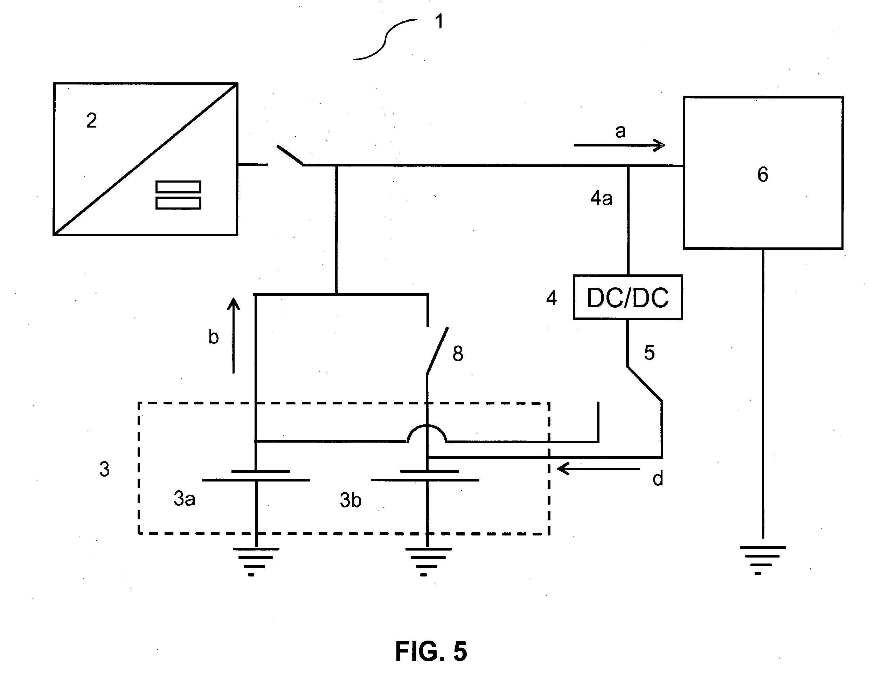

After the recharge that follows after desulphation or equalization of battery 3a, it is possible to equalize battery 3b using the same scheme, i.e. by providing power from battery 3a. This is shown in Fig. 5, in which battery 3b is disconnected from the radio base station 6 (by switch 8) and the step up converter4 is connected to battery 3b (by switch 5). Thus, power from battery 3a both provide load to the radio base station (arrows b and a) and simultaneously provides a desulphation or equalization power to battery 3b (arrow d). It may however be useful to let the batteries cycle a few cycles before equalization of battery 3b is performed.

There are many variants of the above describe scheme that can be used. In order to make the batteries more equal, it is possible to run the load on battery 3a, i.e. by disconnecting string 3b, after the desulphation/equalization of string 3a has ended. This may be performed until string 3a has the same SOC as battery 3b. Then, battery 3b may be reconnected to the bus, thereby facilitating that the batteries are equal at the end of the battery discharge cycle.

### Example 1. End of Discharge Voltage (EODV) of a battery as a function of cycles/time

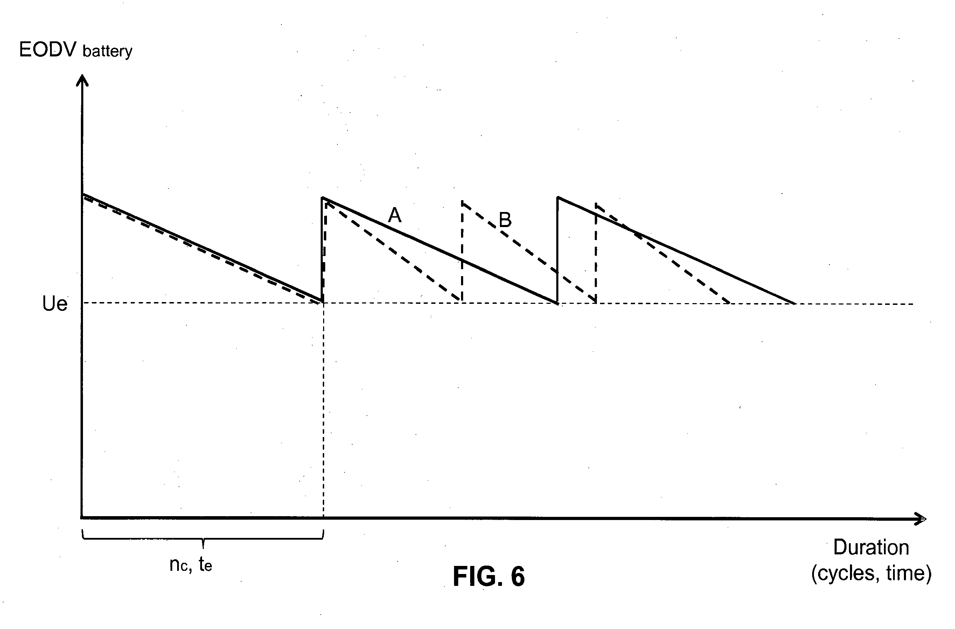

The advantages of the method according to the present disclosure are further illustrated by the hypothetical example as shown in Fig. 6. This Figure shows the End of Discharge Voltage (EODV) as a function of time of a battery that is desulphated by means of the internal desulphation according to the present invention (A, solid line) compared to a battery that is desulphated by an external desulphator (B, dotted line), e.g. a generator. The batteries in this examples could for example be batteries of a hybrid system.

The X-axis in Fig. 6 shows the time (or the number of cycles that the batteries have been discharged). The Y-axis is the EODV of the batteries, i.e. the voltage of the battery at termination of a discharge. At the EODV of a battery, most of the energy is spent and the voltage would drop rapidly if discharge were to continue. To protect the battery from over-discharging, operation beyond a specific EODV is usually prevented.

After a number of recharge and discharge cycles, the EODV decreases slowly. This is due to the charging conditions of the battery. After n_{c} cycles (or after time tₑ), desulphation or equalization charging is performed. This is seen as the sudden steep increase of the EODV curves. Desulphation may also be performed when the voltage has dropped to a preset voltage value Uₑ.

Since the battery being subjected to internal desulphation is equalized or desulphated with a constant current, the EODV is decreasing more slowly as compared to when the desulphation is performed by an external generator, such as letting a diesel generator run for long time. Thus, when performing desulphation with an external desulphator, it may require that the desulphation is performed more often compared to when desulphation is performed as in the present invention.

The efficiency of the desulphation may be dependent on how often it is performed and how low the voltage is when desulphation is initiated. As discussed above, desulphation may be triggered after a certain number of cycles or after a specific period of time or when the EODV has dropped below a specific value. Further, desulphation may be initiated as a response to a specific performance of the discharge. Thus, the parameters related to the performance of the discharge may be measured and desulphation may be triggered when certain parameter values are measured.

## Claims

1. A method for desulphating a lead-acid battery storage system during its powering of a load, wherein said battery storage system comprises at least two batteries connected in parallel, the method comprising
- disconnecting at least one battery from said load, and
- desulphating said disconnected battery with power from at least one battery connected to said load.

2. A method according to claim 1, wherein the at least two batteries comprise at least one battery string.

3. A method according to claim 2, wherein the at least one battery string comprises at least two battery cells coupled in series.

4. A method according to any previous claim, further comprising
- reconnecting said disconnected battery after desulphation;

5. A method according to one of the preceding claims, further comprising
- disconnecting another battery from said load, and
- desulphating said disconnected battery with power from at least one battery connected to said load.

6. A method according to any one of the preceding claims, further comprising
- during desulphation of the disconnected battery, raising the voltage of said power from at least one battery connected to said load.

7. A method according to claim 6, wherein the voltage is raised by means of at least one DC/DC step-up converter.

8. A method according to any previous claim, wherein the step of disconnecting a battery occurs after recharge of all batteries of the battery storage system.

9. A method according to claim 8, wherein the step of disconnecting a battery occurs after at least one cycle of recharge and discharge of all batteries of the battery storage system.

10. A method according to any one of claims 8 or 9, wherein the batteries are at 60-99 %, such as 85-97 %, such as 90-95% state of charge, SOC, after recharge.

11. A method according to any previous claim, wherein the desulphation ends when the disconnected battery has a state of charge, SOC of about 25-55 %.

12. A method according to any previous claim, wherein the desulphation is performed by providing a substantially constant current to the disconnected battery.

13. A method according to any previous claim, wherein the load comprises a radio base station.

14. A battery device for powering a radio base station comprising
- at least two lead-acid batteries connected in parallel;
- a switch for disconnecting and re-connecting at least one of said batteries from/to the radio base station; and
- at least one step-up converter arranged to raise the voltage of the power of the connected battery for desulphating said disconnected battery.

15. A battery device according to claim 14, wherein the step up converter comprises at least one DC/DC converter.

16. A hybrid energy system for a radio base station comprising
- at least one battery device according to any one of claims 14-15 arranged to power said radio base station; and
- a generator arranged to recharge said batteries of the device.

## Patentansprüche

1. Verfahren zur Entschwefelung eines Blei-Säure-Batteriespeichersystems, während es eine Last mit Energie versorgt, wobei das Batteriespeichersystem mindestens zwei parallelgeschaltete Batterien umfasst, wobei das Verfahren umfasst:
- Trennen mindestens einer Batterie von der Last, und
- Entschwefeln der abgeklemmten Batterie mit Energie von mindestens einer Batterie, die mit der Last verbunden ist.

2. Verfahren nach Anspruch 1, wobei die mindestens zwei Batterien mindestens einen Batteriestrang umfassen.

3. Verfahren nach Anspruch 2, wobei der mindestens eine Batteriestrang mindestens zwei Batteriezellen umfasst, die in Reihe geschaltet sind.

4. Verfahren nach einem der vorhergehenden Ansprüche, welches ferner umfasst:
- Wiederanschließen der abgeklemmten Batterie nach der Entschwefelung.

5. Verfahren nach einem der vorhergehenden Ansprüche, welches ferner umfasst:
- Trennen einer anderen Batterie von der Last, und
- Entschwefeln der abgeklemmten Batterie mit Energie von mindestens einer Batterie, die mit der Last verbunden ist.

6. Verfahren nach einem der vorhergehenden Ansprüche, welches ferner umfasst:
- während der Entschwefelung der abgeklemmten Batterie, Erhöhen der Spannung der Energie von mindestens einer Batterie, die mit der Last verbunden ist.

7. Verfahren nach Anspruch 6, wobei die Spannung mittels mindestens eines DC/DC-Aufwärtswandlers erhöht wird.

8. Verfahren nach einem der vorhergehenden Ansprüche, wobei der Schritt des Trennens einer Batterie nach dem Wiederaufladen aller Batterien des Batteriespeichersystems durchgeführt wird.

9. Verfahren nach Anspruch 8, wobei der Schritt des Trennens einer Batterie nach mindestens einem Zyklus des Ladens und Entladens aller Batterien des Batteriespeichersystems durchgeführt wird.

10. Verfahren nach einem der Ansprüche 8 oder 9, wobei die Batterien nach dem Wiederaufladen einen Ladezustand, SOC, von 60-99 %, wie etwa 85-97 %, wie etwa 90-95 % aufweisen.

11. Verfahren nach einem der vorhergehenden Ansprüche, wobei die Entschwefelung endet, wenn die abgeklemmte Batterie einen Ladezustand, SOC, von etwa 25-55 % aufweist.

12. Verfahren nach einem der vorhergehenden Ansprüche, wobei die Entschwefelung durchgeführt wird, indem der abgeklemmten Batterie ein im Wesentlichen konstanter Strom zugeführt wird.

13. Verfahren nach einem der vorhergehenden Ansprüche, wobei die Last eine Funkbasisstation umfasst.

14. Batterieeinrichtung zur Versorgung einer Funkbasisstation mit Energie, welche umfasst:
- mindestens zwei parallelgeschaltete Blei-Säure-Batterien;
- einen Schalter zum Trennen und Wiederanschließen mindestens einer der Batterien von der/an die Funkbasisstation; und
- mindestens einen Aufwärtswandler, der dafür eingerichtet ist, die Spannung der Energie der angeschlossenen Batterie zum Entschwefeln der abgeklemmten Batterie zu erhöhen.

15. Batterieeinrichtung nach Anspruch 14, wobei der Aufwärtswandler mindestens einen DC/DC-Wandler umfasst.

16. Hybrid-Energiesystem für eine Funkbasisstation, welches umfasst:
- mindestens eine Batterieeinrichtung nach einem der Ansprüche 14-15, die dafür eingerichtet ist, die Funkbasisstation mit Energie zu versorgen; und
- einen Generator, der dafür eingerichtet ist, die Batterien der Einrichtung wiederaufzuladen.

## Revendications

1. Procédé de désulfatation d'une batterie d'accumulateurs au plomb acide lors de son alimentation d'une charge, dans lequel ladite batterie d'accumulateurs comprend au moins deux batteries connectées en parallèle, le procédé consistant à :
- déconnecter au moins une batterie de ladite charge, et
- désulfater ladite batterie déconnectée à l'aide d'une alimentation à partir d'au moins une batterie connectée à ladite charge.

2. Procédé selon la revendication 1, dans lequel l'au moins deux batteries comprennent au moins une chaine de batteries.

3. Procédé selon la revendication 2, dans lequel l'au moins une chaine de batteries comprend au moins deux cellules de batterie couplées en série.

4. Procédé selon l'une quelconque des revendications précédentes, consistant en outre à
- reconnecter ladite batterie déconnectée après désulfatation.

5. Procédé selon l'une quelconque des revendications précédentes, consistant en outre à
- déconnecter l'autre batterie de ladite charge, et
- désulfater ladite batterie déconnectée à l'aide d'une alimentation à partir d'au moins une batterie connectée à ladite charge.

6. Procédé selon l'une quelconque des revendications précédentes, consistant en outre à
- pendant la désulfatation de la batterie déconnectée, augmenter la tension de l'alimentation à partir d'au moins une batterie connectée à ladite charge.

7. Procédé selon la revendication 6, dans lequel on augmente la tension au moyen d'au moins un convertisseur élévateur CC / CC.

8. Procédé selon l'une quelconque des revendications précédentes, dans lequel l'étape consistant à déconnecter une batterie survient après la recharge de toutes les batteries du système d'accumulateurs.

9. Procédé selon la revendication 8, dans lequel l'étape consistant à déconnecter une batterie survient après au moins un cycle de recharge et de décharge de toutes les batteries du système d'accumulateurs.

10. Procédé selon l'une quelconque des revendications 8 ou 9, dans lequel les batteries sont comprises entre 60 % et 99 %, telles qu'entre 85 % et 97 %, telles qu'entre 90 % et 95% de l'état de charge, EDC, après recharge.

11. Procédé selon l'une quelconque des revendications précédentes, dans lequel la désulfatation se termine lorsque la batterie déconnectée possède un état de charge, EDC compris entre environ 25 % et 55 %.

12. Procédé selon l'une quelconque des revendications précédentes, dans lequel la désulfatation est effectuée en fournissant un courant sensiblement constant à la batterie déconnectée.

13. Procédé selon l'une quelconque des revendications précédentes, dans lequel la charge comprend une station radio de base.

14. Dispositif de batterie pour alimenter station radio de base comprenant
- au moins deux batteries au plomb acide connectées en parallèle ;
- un interrupteur pour déconnecter et reconnecter au moins une desdites batteries à partir de / à la station radio de base ; et
- au moins un convertisseur élévateur conçu pour augmenter la tension de l'alimentation de la batterie connectée pour la désulfatation e ladite batterie déconnectée.

15. Dispositif de batterie selon la revendication 14, dans lequel le convertisseur élévateur comprend au moins un convertisseur CC / CC.

16. Système énergétique hybride pour une station radio de base comprenant
- au moins un dispositif de batterie selon l'une quelconque des revendications 14 à 15 conçu pour alimenter ladite station radio de base ; et
- un générateur conçu pour recharge lesdites batteries du dispositif.
